# EUROPÄISCHE PATENTANMELDUNG

(11) **EP 3 000 567 A1**
(43) Veröffentlichungstag der Anmeldung: **30.03.2016**
(21) Anmeldenummer: 15184329.9
(22) Anmeldetag: 08.09.2015
(51) Int. Cl.: B26D 1/24, B26D 1/00

(54) **VORRICHTUNG ZUR HERSTELLUNG VON VERBUNDSICHERHEITSGLASSCHEIBEN, MESSERANORDNUNG DAFÜR UND VERFAHREN ZUM ABSCHNEIDEN EINES FOLIENSTREIFENS**

(30) Priorität: 24.09.2014 DE 102014113850
(71) Anmelder: Bystronic Lenhardt GmbH, 75242 Neuhausen-Hamberg (DE)
(72) Erfinder: Wellner, Rupert, 91602 Dürrwangen (DE); Hartmann, Dieter, 64342 Seeheim-Jugenheim (DE)
(74) Vertreter: Twelmeier Mommer & Partner

(57) **Zusammenfassung**

Beschrieben wird eine Vorrichtung und eine Messeranordnung (9) zum Abschneiden einer zwischen zwei Glastafeln (3) liegenden und über Außenkanten (5, 6) der Glastafeln (3) herausragenden thermoplastischen Kunststofffolie (4) in einer Vorrichtung (1) zur Herstellung von Verbundsicherheitsglasscheiben mit folgenden Merkmalen: einem scheibenförmigen Untermesser (10) und einem scheibenförmigen Obermesser (11); jedes der Messer (10; 11) hat eine entlang seines äußeren Umfangs umlaufende Schneide (12; 13), ist drehbar um eine Drehachse (14; 15) gelagert und hat eine Flanke (20; 21), die sich auf einer seiner Seiten von seiner Schneide (12; 13) in Richtung zu seiner Drehachse (14; 15) erstreckt; zumindest eines der Messer (11) ist drehfest mit einer Antriebswelle (17) verbunden, welche von einem Motor (25) antreibbar ist; die beiden Messer (10, 11) sind so zueinander angeordnet, dass die beiden Schneiden (12, 13) sich berühren und dass sich die Flanken (20, 21) der beiden Messer (10, 11) abschnittsweise überdecken, um ein scherenartiges aneinander Entlanggleiten der beiden Schneiden (12, 13) zum Durchtrennen der Folie (4) zu ermöglichen; zumindest die Schneide (13) eines der Messer (11) weist entlang seiner Drehachse (15) gesehen eine von der Kreisform abweichende Form auf; die von der Kreisform abweichende Schneide (13) weist an mehreren entlang des Umfangs des Messers (11) verteilten Stellen (31) den gleichen Abstand zur Drehachse (15) des Messers auf; zwischen jeweils zwei der Stellen (31), deren Abstand zur Drehachse (15) des Messers (11) gleich ist, verändert die Schneide (13) ihren Abstand zur Drehachse (15) des Messers (11) stetig.

## Beschreibung

Die Erfindung geht von einer Vorrichtung zur Herstellung von Verbundssicherheitsglasscheiben aus, welche eine Auflage für übereinanderliegende Glastafeln mit dazwischenliegender thermoplastischer Kunststofffolie aufweist, die über Außenkanten der Glastafeln herausragt. Die übereinanderliegenden Glastafeln bilden ein Glastafelpaket. Die Vorrichtung enthält einen entlang einer Außenkante der Glastafeln relativ zu der Auflage bewegbaren Träger, an welchem eine Messeranordnung zum Abschneiden der über Außenkanten der Glastafeln herausragenden Folie angeordnet ist. Zumindest eine Führungsrolle zum Anlegen an eine Außenkante einer der Glastafeln ist drehbar an dem Träger gelagert. Die Führungsrolle hat eine vorbestimmte Position relativ zu der Messeranordnung, welche sich bei einer Verschiebung des Trägers nicht ändert, so dass die Führungsrolle beim Verschieben des Trägers entlang der Außenkante der Glastafel rollt und dabei die Folie von der Messeranordnung in einen gleichbleibenden Abstand zu der Außenkante der Glastafel abgeschnitten wird. Die Erfindung geht ferner von einem Verfahren zum Abschneiden einer zwischen zwei Glastafeln liegenden und über Außenkanten der Glastafeln herausragenden thermoplastischen Kunststofffolie bei der Herstellung von Verbundsicherheitsglasscheiben aus, bei welchem eine Messeranordnung nahe einer Außenkante der Glastafeln positioniert wird, und bei welchem die Messeranordnung parallel zu der Außenkante der Glastafel bewegt wird, so dass die Folie in einem gleichbleibenden Abstand zu der Außenkante der Glastafel abgeschnitten wird.

Eine Vorrichtung und ein Verfahren der eingangs genannten Art sind aus der EP 2 087 971 A2 bekannt. Die dabei verwendete Messeranordnung enthält ein längliches Messer mit einer quer zur Folienebene verlaufenden Schneide, welches oszillierend entlang seiner Schneide bewegt wird.

Aus der DE 20 2009 017 973 U1 ist ein Verfahren und eine Vorrichtung der eingangs genannten Art bekannt, bei welcher ein Folienschneidemesser vorgesehen ist, dessen Schneide senkrecht zu der zu bearbeitenden Außenkante der Glastafel verläuft und entlang der Außenkante bewegt wird, ohne sich quer zur Folienebene zu bewegen.

Aus der WO 2013/143879 A1 ist eine Trenneinrichtung und ein Trennverfahren zum Trimmen von Solarmodulen offenbart, welche einen mehrgliedrig programmierbaren Roboter aufweist, welcher ein Trennwerkzeug führt, um eine über die Außenkanten des Solarmoduls überstehende Folie bevorzugt bündig mit der Randfläche abzuschneiden. Die Ausgestaltung des Trennwerkzeugs ist an sich beliebig, offenbart wird eine Ausbildung des Trennwerkzeugs als gespannter und gegebenenfalls beheizter Schneiddraht oder als Trennmesser. Das Trennmesser kann ein Heißmesser sein, kann ein längliches Trennblatt, beispielsweise eine starr oder oszillierend angeordnete Klinge, aufweisen, oder kann ein rotierendes, scheibenförmiges Trennblatt mit Schneidelementen am randseitigen Umfang aufweisen. Das Trennmesser kann mittels einer Magazinanordnung wechselbar sein.

Der Erfindung liegt die Aufgabe zugrunde, ein verbessertes Verfahren und eine verbesserte Messeranordnung zum Abschneiden einer zwischen zwei Glastafeln liegenden und über Außenkanten der Glastafeln herausragenden Folie bei der Herstellung von Verbundsicherheitsglasscheiben sowie eine verbesserte Vorrichtung zur Herstellung von Verbundsicherheitsglasscheiben mit einer solchen Messeranordnung und zur Durchführung des verbesserten Verfahrens zu schaffen.

Die Aufgabe wird durch eine Messeranordnung mit den Merkmalen des Anspruchs 1, durch eine Vorrichtung mit den Merkmalen des Anspruchs 10 und durch ein Verfahren mit den Merkmalen des Anspruchs 16 gelöst. Vorteilhafte Weiterbildungen sind Gegenstand der Unteransprüche.

Eine erfindungsgemäße Messeranordnung enthält ein Untermesser und ein Obermesser. Jedes der Messer ist scheibenförmig, hat eine entlang seines äußeren Umfangs umlaufende Schneide und ist drehbar um eine Drehachse gelagert. Die beiden Messer sind so zueinander angeordnet, dass die beiden Schneiden sich zumindest an einem Punkt berühren. Zumindest eines der Messer ist drehfest mit einer Antriebswelle verbunden, welche von einem Motor antreibbar ist. Der Motor kann das Messer in eine Rotation um dessen Drehachse versetzen. Bevorzugt ist nur das Obermesser antreibbar und das Untermesser ist frei drehbar gelagert. Jedes Messer hat eine Flanke, die sich auf einer seiner Seiten von seiner Schneide in Richtung zu seiner Drehachse erstreckt. Die Flanke des Untermessers ist der Flanke des Obermessers zugewandt. Die Flanken der beiden Messer überdecken sich abschnittsweise, um ein scherenartiges aneinander Entlanggleiten der Schneiden der beiden Messer zum Durchtrennen der Folie zu ermöglichen. Zumindest die Schneide eines der Messer weist entlang seiner Drehachse gesehen eine von der Kreisform abweichende Form auf, welche insbesondere die Form eines Polygons hat. Die von der Kreisform abweichende Schneide weist an mehreren entlang des Umfangs des Messers verteilten Stellen, bei denen es sich insbesondere um die Ecken des Vielecks handelt, den gleichen Abstand zur Drehachse des Messers auf. Zwischen jeweils zwei der Stellen, deren Abstand zur Drehachse des Messers gleich ist, verändert die Schneide ihren Abstand zur Drehachse des Messers stetig. Bevorzugt weist die von der Kreisform abweichende Schneide an mehr als fünf gleichmäßig am Umfang des Messers verteilten Stellen den gleichen Abstand zur Drehachse des Messers auf. Wenn die von der Kreisform abweichende Schneide die Form eines Vielecks hat, hat das Vieleck bevorzugt mehr als fünf Ecken.

Bei der Herstellung von Verbundsicherheitsglas liegt eine erste Glastafel auf einer Auflage, welche als Riemen- oder Rollenförderer ausgebildet sein kann. Auf die erste Glastafel wird zumindest eine thermoplastische Kunststofffolie, insbesondere aus Polyvinylbutyral (PVB), aufgelegt, welche größer als die Glastafel ist, so dass die Folie alle Außenkanten der Glastafel überragt. Auf die Folie wird eine zweite Glastafel gelegt. Anschließend wird die über die Außenkanten der Glastafeln herausragende Folie derart beschnitten, dass die Folie an allen Außenkanten einen gleichmäßigen Überstand aufweist, der bevorzugt im Bereich von 1 mm bis 4 mm liegt. Anschließend wird das Paket aus den Glastafeln mit der dazwischenliegenden Folie in an sich bekannter Weise unter Wärmeeinwirkung zu einer Verbundsicherheitsglasscheibe verpresst. Alternativ können vor dem Verpressen noch weitere Glastafeln unter Zwischenlage einer oder mehrerer Folien aufgelegt werden, die dann jeweils in gleicher Weise beschnitten werden können. Die Folie bildet eine flexible Schicht zwischen den Glastafeln und bindet im Falle eines Bruches der fertigen Scheibe Glassplitter.

Bei dem erfindungsgemäßen Verfahren wird die erfindungsgemäße Messeranordnung nahe einer Außenkante der Glastafeln positioniert, so dass das Obermesser oberhalb der Folienebene und das Untermesser unterhalb der Folienebene liegt und beide Messer die Folienebene schneiden. Die Glastafeln liegen bevorzugt horizontal, können jedoch auch schräg liegen. Bei schräg liegenden Glastafeln sind die Angaben "oberhalb" und "unterhalb" der Folienebene so zu verstehen, dass darunter die beiden gegenüberliegenden Seiten der Folienebene verstanden werden. Eines der Messer wird motorisch rotiert, sodass dessen Schneide scherenartig an der Schneide des anderen Messers entlanggleitet und die Folie durch die beiden Schneiden durchtrennt wird. Die beiden Messer werden gleichzeitig, also ohne ihre Position zueinander zu verändern, parallel zu der Außenkante der Glastafel bewegt, so dass die Folie in einem gleichbleibenden Abstand zu der Außenkante der Glastafel abgeschnitten wird. Die Messer werden so an der Außenkante der Glastafel positioniert und entlanggeführt, dass die Messer keine der Glastafeln berühren. Der abgeschnittene Folienstreifen wird abgeführt, beispielsweise indem er in einen Sammelbehälter geleitet wird.

Das erfindungsgemäße Verfahren kann besonders vorteilhaft mit einer erfindungsgemäßen Vorrichtung durchgeführt werden. Eine erfindungsgemäße Vorrichtung enthält eine Auflage für übereinanderliegende Glastafeln mit dazwischenliegender und über Außenkanten der Glastafeln herausragenden Folie. Die Vorrichtung enthält einen entlang einer Außenkante der Glastafeln relativ zu der Auflage bewegbaren Träger. An dem Träger ist eine Schneidvorrichtung mit einer erfindungsgemäßen Messeranordnung und zumindest eine drehbar gelagerte Führungsrolle zum Anlegen an eine Außenkante einer der Glastafeln angeordnet. Die Führungsrolle hat eine vorbestimmte Position relativ zu den Schneiden der beiden Messer, welche sich bei einer Verschiebung des Trägers nicht ändert. Die Führungsrolle kann beim Verschieben des Trägers an der Außenkante der Glastafel entlang gerollt werden. Dabei wird die Folie von den scherenartig aneinander entlanggleitenden Schneiden der beiden Messer in einem gleichbleibenden Abstand zu der Außenkante der Glastafel abgeschnitten, wobei der Abstand durch die Position der Führungsrolle zu den Schneiden der beiden Messer vorbestimmt ist. Durch eine Andrückeinrichtung wird der Träger beim Verschieben mit seiner Führungsrolle gegen die Außenkante der Glastafel federnd angedrückt und kann so dem Verlauf der Außenkante folgen. Beim Verschieben des Trägers entlang der Außenkante der Glastafel wird bevorzugt die Rotationsgeschwindigkeit des angetriebenen Messers so auf die Vorschubgeschwindigkeit des Trägers abgestimmt, dass die Umfangsgeschwindigkeit des Messers größer als die Vorschubgeschwindkeit ist, bevorzugt um den Faktor 1 bis 2, insbesondere etwa um den Faktor 1,5. Zur Führung der Messeranordnung kann der Träger zumindest eine Führungsrolle zum Anlegen an eine Oberseite oder Unterseite einer Glastafel aufweisen, die drehbar an dem Träger gelagert ist.

Die Erfindung hat wesentliche Vorteile:
- Zwischen den beiden scheibenförmigen Messern lässt sich die Folie wie mit einer Schere schneiden. Die Rotationsrichtung des angetriebenen Messers ändert sich nicht, so dass die Folie durch die Rotation zum Arbeitspunkt der beiden Messer gezogen und dort durchtrennt wird. Während die Rotation des Messers zu einer Kontinuität im Schneidvorgang führt, wirkt die abschnittsweise ihren Abstand zu Drehachse des Messers verändernde Schneide, dass sich der Schneidenwinkel im Arbeitspunkt der beiden Messer wiederholt verändert. Mit dieser Kombination aus kontinuierlichem Scherenschnitt mit sich veränderndem Schneidenwinkel lässt sich überraschenderweise bei den für die Herstellung von Verbundsicherheitsglasscheiben verwendeten Kunststofffolien eine sehr hohe Schnittqualität, eine lange Standzeit der Messer und eine geringe Störungsanfälligkeit erreichen. Die Ergebnisse sind besser als bei der Verwendung von zwei kreisförmigen Messern, bei welchen der Winkel der Schneiden im Arbeitspunkt während der Rotation konstant bleibt.
- Bei der Herstellung von Verbundsicherheitsglasscheiben ist sauberes Arbeiten unverzichtbar, deshalb wird das Aufeinanderlegen der Glastafeln und der Folie in einem Reinraum durchgeführt. Beim Abschneiden der überstehenden Folie in der aus dem Stand der Technik bekannten Weise, kommt es häufig zu einer "Krümelbildung", wobei durch das Messer beim Durchtrennen der Folie kleine Folienstücke an der Schnittkante der Folie abgetrennt werden, welche dann die Vorrichtung und/oder die Glastafeln verschmutzen können. Mit der vorliegenden Erfindung lässt sich ein sehr sauberer Schnitt der Folie erreichen, und die Krümelbildung wird vermieden.
- Dadurch, dass die Messer rotieren, wird eine sehr hohe Standzeit der Schneiden erreicht. Die Messer müssen nur selten ausgetauscht werden.
- Durch das scherenartige Durchtrennen der Folie mittels der beiden scheibenförmigen Messer wird die Folie beim Schneiden kaum quer zur Folienebene verzogen oder gebogen. Gleichzeitig wird auch eine Zugbelastung der Folie parallel zur Folienebene vermieden. Das flexible Material der Folie neigt beim Beschneiden dazu, sich unvorhersehbar zu dehnen oder zu schrumpfen, wenn es Zug- oder Biegebelastungen ausgesetzt wird. Durch eine solche undefinierbare Art und Weise der Verformung können Welligkeiten und andere Unregelmäßigkeiten entstehen, welche die Qualität des Verbundsicherheitsglases im Randbereich beeinträchtigen. Bei der erfindungsgemäßen Messeranordnung werden die von Ober- und Untermesser ausgeübten Schnittkräfte durch das jeweils andere Messer abgefangen, so dass die Belastung der Folie durch Schnittkräfte stark verringert wird. In dem neben der Schnittkante liegenden Bereich bleibt die Folie weitgehend kräftefrei, insbesondere, wenn der Arbeitspunkt der Messer in der Folienebene oder leicht darüber liegt. Hierdurch werden unerwünschte Verformungen der Folie vermieden. Gleichzeitig kann der gewünschte Restüberstand der Folie sehr genau eingehalten werden.
- Mit der Erfindung lassen sich beim Schneiden hohe Vorschubgeschwindigkeiten, beispielsweise von 6 m/min, erreichen. Der abgeschnittene Folienstreifen kann auch dabei noch sicher und einfach abgeführt werden.

In bevorzugter Ausgestaltung kann die von der Kreisform abweichende Schneide zwischen jeweils zwei Stellen, deren Abstand zur Drehachse des Messers gleich ist, zumindest einen gradlinig verlaufenden Abschnitt aufweisen. Alternativ kann eine mehreckige Schneide zwischen ihren Ecken auch leicht konkav oder konvex gekrümmt verlaufen. Vorteilhaft ist, wenn die Schneide die Form eines regelmäßigen Vielecks hat, wobei das Vieleck insbesondere sechs bis zehn Ecken aufweist. Dies ist bei einem Messer mit einem Durchmesser von etwa 100 mm bis 150 mm sehr vorteilhaft. Hiermit lässt sich eine besonders gute Schnittqualität erreichen. Die "Ecken" des Polygons können auch durch einen kleinen Eckenradius, beispielsweise mit einem Radius bis zu 5 mm, gerundet sein.

In weiterer Ausgestaltung der Erfindung kann es vorteilhaft sein, wenn nur eines der Messer eine von der Kreisform abweichende Form und das andere Messer eine kreisförmige Schneide aufweist. Bevorzugt ist das Obermesser von dem Motor antreibbar und weist eine von der Kreisform abweichende Schneide auf. Das Untermesser ist bevorzugt frei drehbar gelagert und weist eine kreisförmige Schneide auf. Das Untermesser wird durch das rotierende Obermesser ebenfalls in Rotation versetzt. Hierdurch wird eine einfache Vorrichtung geschaffen, welche gute Schneideergebnisse liefert. Das als Kreismesser ausgebildete Untermesser ermöglicht ein sehr gutes Hinführen der zu schneidenden Folie zu dem Arbeitspunkt der beiden Messer, an welchem die Folie durchtrennt wird. Insbesondere wenn die Folie durch die Schwerkraft nach unten gezogen wird und leicht nach unten hängt, kann ein kreisförmiges Untermesser die Folie wieder kontinuierlich und gleichmäßig zu dem Arbeitspunkt der Messer hochführen. Bevorzugt kann die Drehachse des Untermessers parallel zur Drehachse des Obermessers sein.

Der Abstand der Drehachse des Obermessers zu der Drehachse des Untermessers ist etwas kleiner als die Summe aus dem kleinsten Abstand der Schneide des Obermessers zu seiner Drehachse und des kleinsten Abstands der Schneide des Untermessers zu seiner Drehachse, um eine Flankenüberdeckung der beiden rotierenden Messer jederzeit zu gewährleisten.

In weiterer vorteilhafter Ausgestaltung kann zumindest eines der Messer in einem Schnitt entlang seiner Drehachse gesehen an seiner dem anderen Messer zugewandten Flanke konkav gekrümmt sein. Bevorzugt sind beide Messer an ihrer dem anderen Messer zugewandten Flanke konkav gekrümmt. Hierdurch berühren sich die beiden Messer nur an den Schneiden, aber nicht an ihren konkaven Flanken. Die Reibung zwischen beiden Schneiden wird verringert und die Schnittqualität der Messer wird verbessert.

In der erfindungsgemäßen Vorrichtung ist die Drehachse der am Träger angeordneten Führungsrolle bevorzugt senkrecht zu der Ebene der Auflage für die Glastafeln angeordnet. Vorteilhaft ist eine erste Führungsrolle zum Anlegen an eine Außenkante einer unterhalb der Folie liegenden Glastafel und eine zweite Führungsrolle zum Anlegen an eine Außenkante einer oberhalb der Folie liegenden Glastafel vorgesehen. Durch die beiden Führungsrollen wird sowohl die unterhalb der Folie liegende Glastafel als auch die oberhalb der Folie liegende Glastafel abgetastet und die Messer bzw. die Schnittkanten der Messer weisen ihren vorbestimmten Abstand stets zu der weiter außen liegenden Außenkante der Glastafeln auf. Hierdurch wird verhindert, dass eines der Messer eine Glastafel berührt, auch wenn die Positionierung der beiden Glastafeln aufgrund von Toleranzen leicht unterschiedlich ist oder wenn an einer der Außenkanten eine durch einen unregelmäßigen Bruchverlauf des Glases hervorgerufene Erhebung vorhanden sein sollte.

Es ist vorteilhaft, wenn das Obermesser auf der der Lagerung des Untermessers zugewandten Seite des Untermessers angeordnet ist. Dabei wird das Obermesser an dem Untermesser an dessen der Lagerung des Untermessers zugewandten Flanke vorbeigeführt. Das Untermesser weist beim Schneiden einen geringeren Abstand zu der Außenkante der Glastafel als das Obermesser auf. Hierdurch wird das Abführen des abgeschnittenen Folienstreifens erleichtert und es können Verwicklungen und Stauungen des Folienstreifens vermieden werden.

In weiterer Ausgestaltung kann vorgesehen sein, dass nach dem Auflegen der zweiten Glastafel auf die Folie und vor dem Beschneiden der Folie mit einer erfindungsgemäßen Messeranordnung zunächst ein "Grobschnitt" der Folie durchgeführt wird, bei welchem an einer der Außenkanten ein Streifen der über diese Außenkante herausragenden Folie, insbesondere in einem Abstand von etwa 40 mm zu dieser Außenkante, in an sich beliebiger Weise abgeschnitten wird. Diese Vorgehensweise ist insbesondere dann vorteilhaft, wenn die verwendete Folie wesentlich größer ist als die beiden Glastafeln, insbesondere wenn die Folie an einer Außenkante mehr als 40 mm über diese Außenkante herausragt. Bei der Ausführung dieses Grobschnitts besteht nur eine geringe Gefahr, dass die Folie in dem zwischen den Glastafeln befindlichen Bereich unzulässig verzogen wird, da die Folie in einem relativ großen Abstand zu den Glastafeln abgeschnitten wird. Folglich ist dieser Grobschnitt ohne besondere Schwierigkeiten und mit hoher Geschwindigkeit ausführbar. Bei der Herstellung von Verbundsicherheits-glasscheiben werden teilweise Folien verwendet, welche 100 mm oder mehr breiter als die Glastafeln sind. Einen solch breiten Folienstreifen aus dem Bereich einer erfindungsgemäßen Messeranordnung abzuführen kann problematisch sein. Durch den genannten Grobschnitt kann das Glastafelpaket mit der dazwischenliegenden Folie für das Beschneiden mit einer erfindungsgemäßen Messeranordnung vorbereitet werden, so dass diese sehr gute Schneidergebnisse liefert und die Vorrichtung sehr störungsfrei arbeitet.

Weitere Vorteile und Merkmale der Erfindung ergeben sich aus der nachfolgenden Beschreibung eines Ausführungsbeispiels in Verbindung mit den Figuren. Es zeigen:
- Figur 1: eine erfindungsgemäße Vorrichtung in schematischer Darstellung,
- Figur 2: eine perspektivische Darstellung auf eine erfindungsgemäße Schneidvorrichtung,
- Figur 3: die Vorrichtung der Figur 2 in einer Explosionsdarstellung,
- Figur 4: eine Vorderansicht der Vorrichtung in Richtung des Pfeiles IV der Figur 2,
- Figur 5: eine Seitenansicht von rechts auf die Vorrichtung der Figur 4,
- Figur 6: eine Seitenansicht von links auf die Vorrichtung der Figur 4,
- Figur 7: eine Draufsicht von oben auf die Vorrichtung der Figur 4.

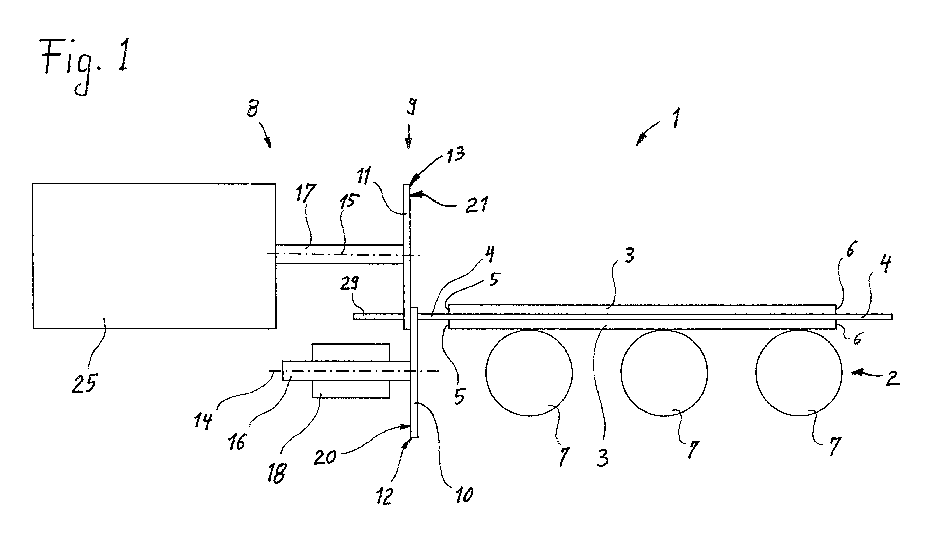

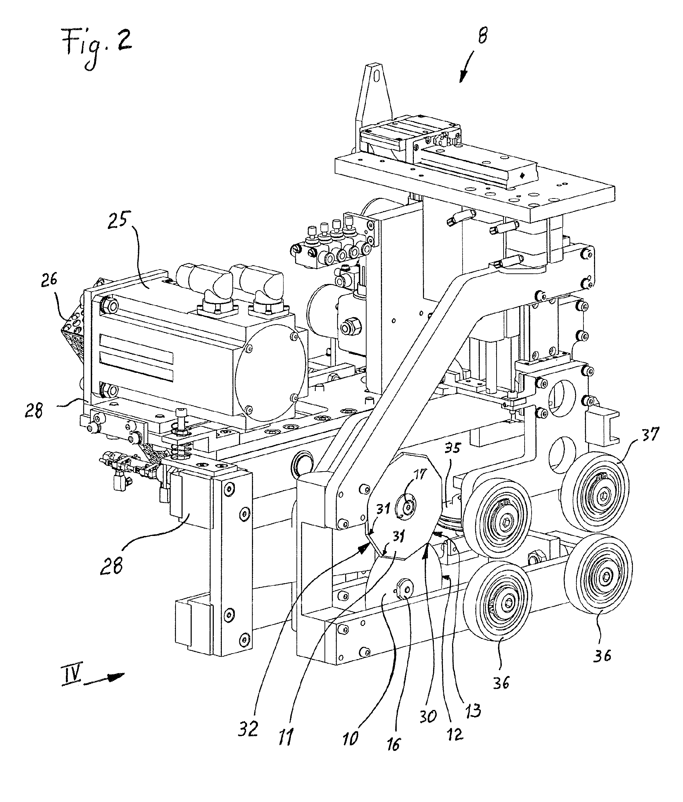

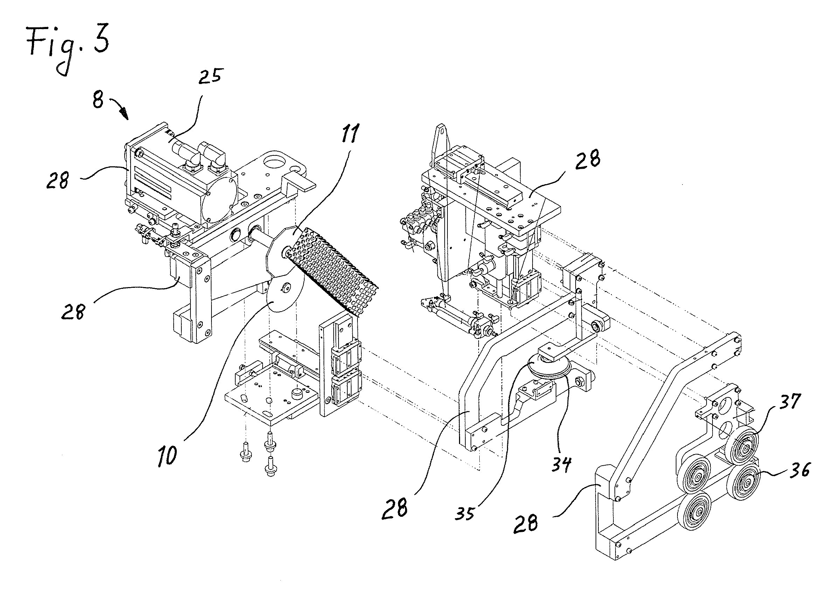

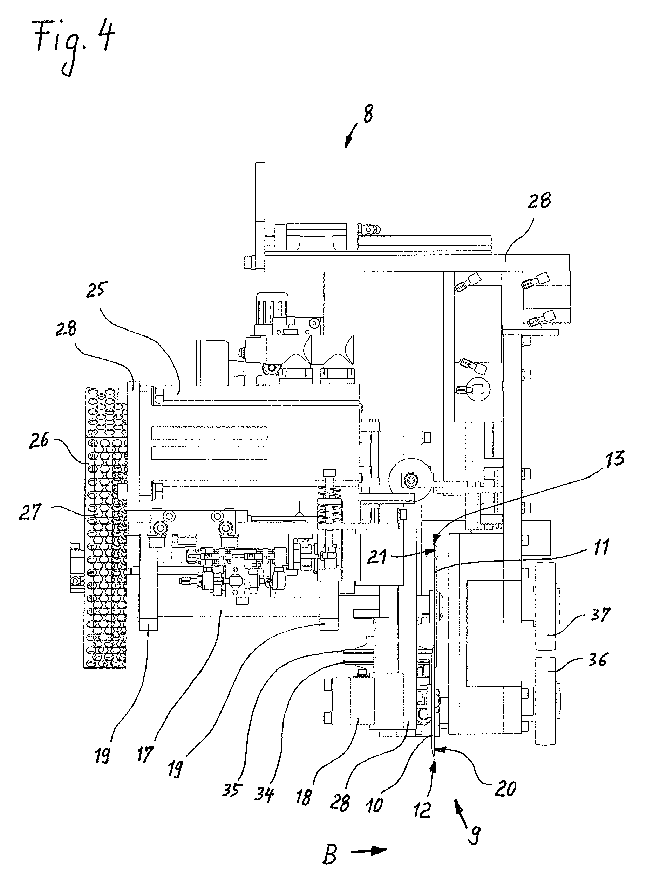

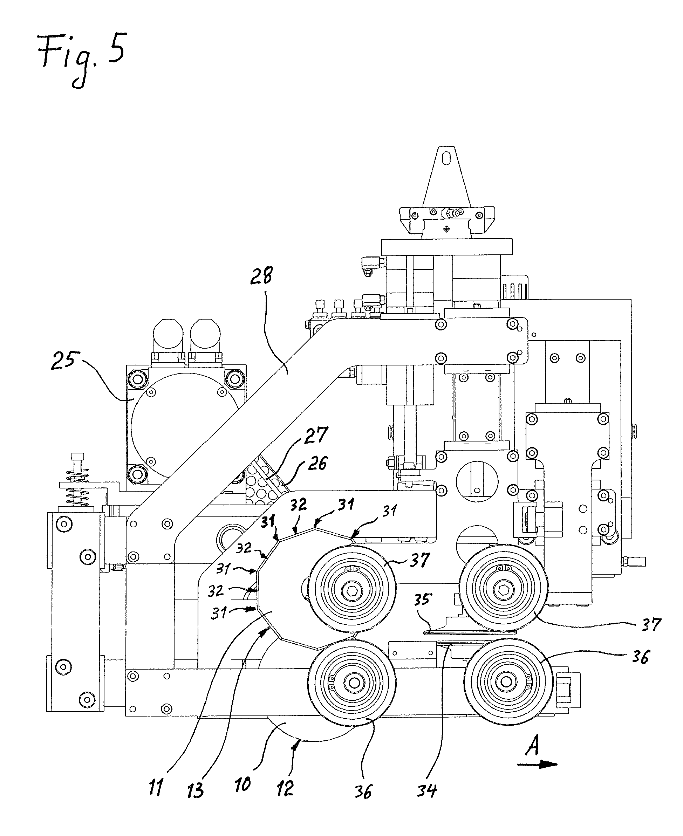

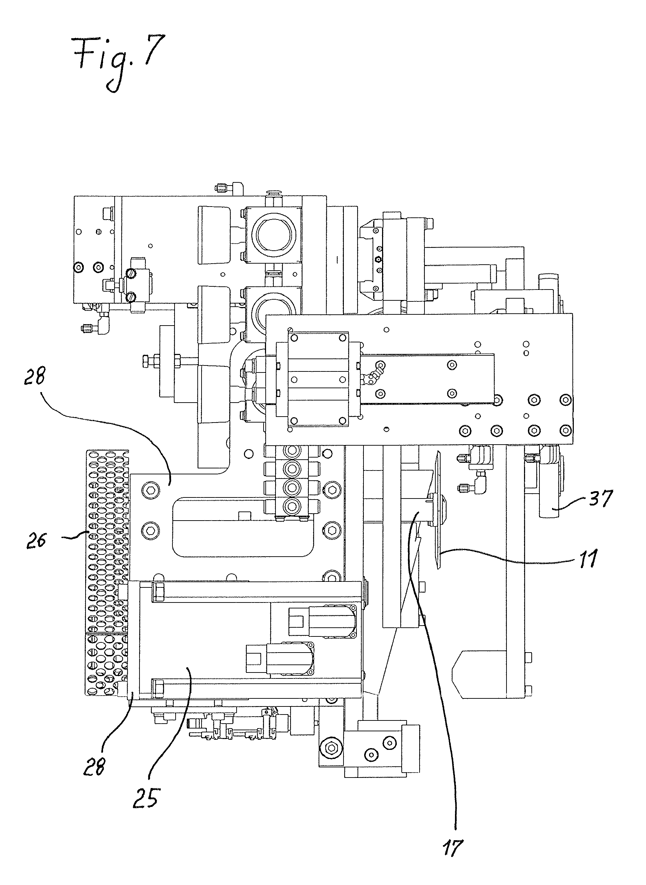

Die in Figur 1 dargestellte Vorrichtung 1 zur Herstellung von Verbundsicherheitsglasscheiben enthält eine Auflage 2 für übereinanderliegende Glastafeln 3 mit einer dazwischenliegenden Folie 4, die über Außenkanten 5, 6 der Glastafeln 3 herausragt. Die Auflage 2 wird durch einen Rollenförderer mit mehreren Rollen 7 gebildet, deren Drehachsen in einer horizontalen Ebene liegen. Bei der Herstellung wird zunächst die untere Glastafel 3 auf die Auflage 2 gelegt. Anschließend wird die Folie 4 auf die untere Glastafel 3 gelegt. Anschließend wird die obere Glastafel 3 auf die Folie 4 gelegt. Beide Glastafeln 3 sind gleich groß und haben dieselbe Außenkontur. Die Vorrichtung 1 enthält ferner eine Schneidvorrichtung 8 mit einer Messeranordnung 9 zum Abschneiden der über die Außenkanten 5, 6 herausragenden Folie 4. Die Messeranordnung 9 enthält ein scheibenförmiges Untermesser 10 und ein scheibenförmiges Obermesser 11. Jedes der Messer 10, 11 hat eine entlang seines äußeren Umfangs umlaufende Schneide 12, 13 und ist drehbar um eine Drehachse 14, 15 gelagert. Das Untermesser 10 sitzt auf einer Achse 16, welche frei drehbar in einer Lagerung 18 gelagert ist. Die Schneidvorrichtung 8 ist im Detail in den Figuren 2 bis 7 erkennbar. Das Obermesser 11 ist drehfest mit einer Antriebswelle 17 verbunden. Die Antriebswelle 17 ist in Lagerungen 19, siehe Figur 4, gelagert. Die Antriebswelle 17 ist wie in Figur 1 schematisch gezeigt, mit einem Motor 25 gekoppelt, welcher das Obermesser 11 in Rotation versetzt. In den Figuren 4 bis 6 ist erkennbar, dass der Motor 25 über einen unter einer Abdeckung 26 verlaufenden Riemen 27 mit der Antriebswelle 17 gekoppelt ist. Bei dem Motor 25 handelt es sich um einen Servomotor mit regelbarer Drehzahl. Der Motor 25 und die Lagerungen 18 und 19 sind an einem mehrteiligen Träger 28, siehe insbesondere Figur 3, angebracht. Der Träger 28 ist bewegbar in der Vorrichtung 1 befestigt, beispielsweise an Linearführungen, so dass die Messeranordnung 9 entlang einer Außenkante 5 der Glastafeln 3 verfahrbar ist. Der Träger 28 ist hierzu mit einem nicht dargestellten Antrieb gekoppelt. Der Antrieb des Trägers 28 und der Motor 25 werden von einer gemeinsamen Steuerung gesteuert. Die Umfangsgeschwindigkeit des Obermessers 11 wird dabei auf das 1,5-fache der Vorschubgeschwindigkeit des Trägers 25 in Richtung des Pfeiles A, siehe Figur 5, eingestellt.

In der Darstellung der Messeranordnung 9 in Figur 1 ist erkennbar, dass eine Flanke 20 des Untermessers 10 eine Flanke 21 des Obermessers 11 abschnittsweise überdeckt. Die Drehachsen 14 und 15 sind parallel zu einander und parallel zu der Ebene der Auflage 2 für die Glastafeln 3 angeordnet. Das Obermesser 11 gleitet an dem Untermesser 10 an dessen der Lagerung 18 zugewandten Flanke 20 vorbei, wobei sich die Schneiden 12, 13 berühren. Das Untermesser 10 weist somit beim Schneiden einen geringeren Abstand zu der Außenkante 5 der Glastafel 3 als das Obermesser 11 auf. Durch die Rotation des Obermessers 11 gleiten die Schneiden 12 und 13 der beiden Messer 10 und 11 scherenartig aneinander entlang und durchtrennen die Folie 4. Von der zwischen den Glastafeln 3 liegenden Folie 4 wird ein Folienstreifen 29 abgeschnitten, welcher aus der Vorrichtung 1 über nicht dargestellte Leitbleche in einen Sammelbehälter geführt werden kann.

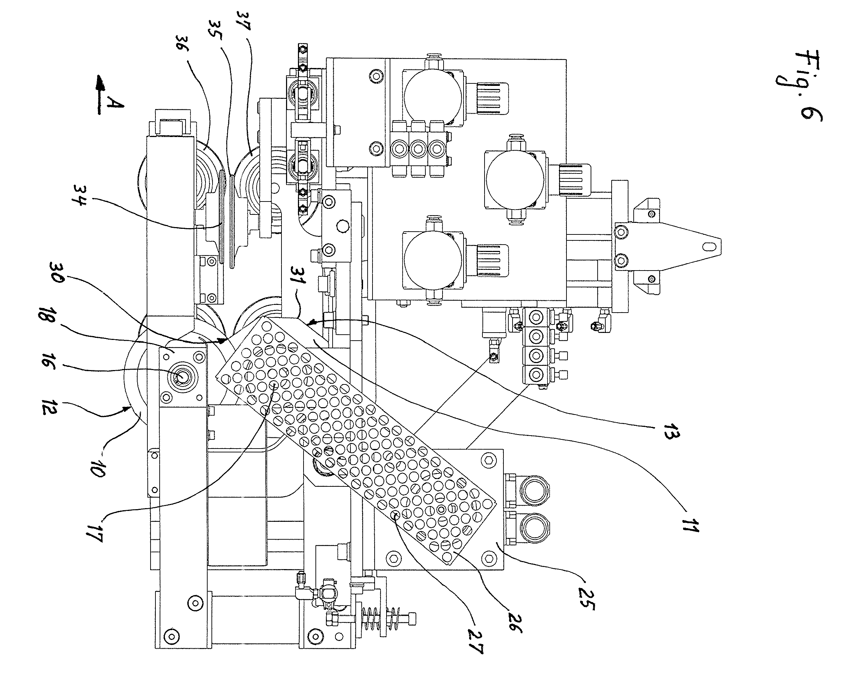

Insbesondere in den Figuren 2 und 6 ist der Arbeitspunkt 30 der scherenartig aneinander entlanggleitenden Schneiden 12 und 13 erkennbar, an welchem die Folie 4 durchtrennt wird. In den Figuren 2 bis 7 ist dabei eine Variante dargestellt, bei welcher das Obermesser 11 an dem Untermesser 10 an dessen der Lagerung 18 abgewandten Flanke vorbeigleitet, so dass das Untermesser 10 beim Schneiden einen größeren Abstand zu der Außenkante 5 der Glastafel 3 als das Obermesser 11 aufweist.

Die Schneide 13 des Obermessers 11 weist entlang seiner Drehachse 15 gesehen, siehe insbesondere Figuren 2 und 5, eine von der Kreisform abweichende Form nämlich die Form eines regelmäßigen Polygons mit zehn Ecken 31, auf. Das Untermesser 10 hat eine kreisförmige Schneide 12. An den gleichmäßig am Umfang des Obermessers 11 verteilten Ecken 31 weist die Schneide den gleichen Abstand zur Drehachse 15 auf. Zwischen jeweils zwei der Ecken 31 weist die Schneide 13 jeweils einen geradlinig verlaufenden Abschnitt 32 auf, so dass die Schneide 13 dort ihren Abstand zur Drehachse 15 jeweils stetig verändert. Beim Entlangschreiten an einem geradlinig verlaufenden Abschnitt 32 ausgehend von einer Ecke 31 verringert sich zunächst der Abstand der Schneide 13 zur Drehachse 15, um sich anschließend wieder zu vergrößern. Bei der Rotation der Messer 10, 11 verändert sich somit der Schneidenwinkel, welcher im Arbeitspunkt 30 von der Schneide 13 zu der Schneide 12 gebildet wird, während des Schneidens im Bereich von einer Ecke 31 zur nächsten Ecke 31 ähnlich einem Schneiden mit einer haushaltsüblichen Schere. Bei Erreichen der nächsten Ecke 31 vergrößert sich der Schneidenwinkel im Arbeitspunkt 30 sprunghaft, um anschließend bis zur nächsten Ecke 31 wieder abzunehmen. Die Folie 4 aus Polyvinylbutyral lässt sich hierdurch mit einer sehr hohen Schnittqualität durchtrennen.

Zum Abschneiden der Folie 4 wird die Messeranordnung 9 so in der Nähe der Außenkante 5 positioniert, dass das Obermesser 11 oberhalb der Folienebene und das Untermesser 10 unterhalb der Folienebene liegt und beide Messer 10, 11 die Folienebene schneiden, siehe Figur 1. Wie schon beschrieben, wird das Obermesser 11 in Rotation versetzt, so dass dessen Schneide 13 scherenartig an der Schneide 12 des Untermessers 10 entlanggleitet. Die Folie 4 wird somit von beiden Schneiden 12, 13 gleichzeitig durchtrennt. Die Messeranordnung 9 wird so positioniert, dass keines der Messer 10, 11 eine Glastafel 3 berührt. Nun werden beide Messer 10, 11 gleichzeitig parallel zu der Außenkante 5 bewegt, so dass die Folie 4 in einem gleichbleibenden Abstand zu der Außenkante 5 abgeschnitten wird. Um die Schneidvorrichtung 8 parallel zu der Außenkante 5 bewegen zu können, ohne dass eines der Messer 10, 11 die Glastafel 3 berührt, sind an dem Träger 28 freidrehbar gelagerte Führungsrollen 34, 35 zum Anlegen an eine Außenkante 5 jeweils einer der Glastafeln 3 angeordnet. Die Drehachsen der Führungsrollen 34 und 35 sind parallel zueinander und senkrecht zu der Ebene der Auflage 2 für die Glastafeln 3 angeordnet. Eine erste Führungsrolle 34 dient zum Anlegen an einer Außenkante 5 einer unterhalb der Folie 4 liegenden Glastafel 3 und eine zweite Führungsrolle 35 dient zum Anlegen an eine Außenkante 5 einer oberhalb der Folie 4 liegenden Glastafel 3.

Die Führungsrollen 34, 35 haben eine von dem Träger 28 eine vorbestimmte Position relativ zu den Schneiden 12, 13 der beiden Messer 10, 11, welche sich bei einer Verschiebung des Trägers 28 entlang des Glastafelpakets nicht ändert. Die Führungsrollen 34, 35 werden beim Verschieben des Trägers 28 der Außenkante 5 der jeweiligen Glastafel 3 entlang gerollt. Die Folie wird dabei von den scherenartig aneinander entlanggleitenden Schneiden 12, 13 in einem gleichbleibenden Abstand zu der Außenkante 5 der Glastafel 3 abgeschnitten. Der Träger 28 wird so an der Außenkante 5 in Richtung des Pfeiles A, siehe Figuren 5 und 6, entlang verschoben und gleichzeitig in Richtung des Pfeiles B, siehe Figur 4, mit den Führungsrollen 34, 35 an die Außenkante 5 federnd angedrückt. Das Andrücken erfolgt über eine als Pneumatikzylinder ausgebildete Andrückeinrichtung. Durch die beiden Führungsrollen 34, 35 wird sichergestellt, dass falls die beiden Außenkanten 5 der Glastafeln 3, siehe Figur 1, aufgrund von Toleranzen nicht exakt übereinander liegen sollten, die beiden Messer 10, 11 stets ihren vorbestimmten Abstand zu der am weitesten herausragenden Außenkante 5 beibehalten und die Messer 10, 11 nicht mit einer Glastafel 3 kollidieren können. Damit der Arbeitspunkt 30 der Messer 10, 11 sich beim Verschieben des Trägers 28 in Bezug auf die Folienebene nicht ändert, sind Führungsrollen 36, 37 zum Anlegen an eine Oberseite bzw. Unterseite einer der Glastafeln 3 frei drehbar an dem Träger 28 gelagert.

Zur Verbesserung der Schnittqualität kann das Untermesser 10 an seiner Flanke 20 und das Obermesser 11 an seiner Flanke 21 jeweils konkav gekrümmt sein. Es reicht eine leichte konkave Krümmung aus, welche in den Figuren nicht erkennbar ist. Die konkave Krümmung bewirkt, dass in der Darstellung der Figur 1 ein Bereich der Flanke 21 des Obermessers 11, auf welchen der Pfeil des Bezugszeichens 21 zeigt, etwas weiter rechts liegt als die Schneide 13. Die Flanke 21 des Obermessers 11 ist somit tellerförmig vertieft gestaltet, wobei die Schneide 13 den in der Darstellung der Figur 1 am weitesten links liegenden Bereich der Flanke 21 bildet. Die Flanke 20 des Untermessers 10 ist analog zu der Flanke 21 des Obermessers 11 konkav gekrümmt, wobei die beiden Flanken 20 und 21 in entgegengesetzte Richtungen gekrümmt sind. Dadurch berühren sich die Messer 10 und 11 nur an den Schneiden 12 und 13. Zwischen den sich überdeckenden Bereichen der beiden Flanken 21, 22 ist ein Freiraum, in welchem sich die Flanken 21, 22 nicht berühren.

**Bezugszeichenliste**

| | | | |
|---|---|---|---|
| 1 | Vorrichtung | 37 | Führungsrolle |
| 2 | Auflage | | |
| 3 | Glastafeln | | |
| 4 | Folie | A | Bewegungsrichtung |
| 5 | Außenkanten | B | Andrückrichtung |
| 6 | Außenkanten | | |
| 7 | Rollen | | |
| 8 | Schneidvorrichtung | | |
| 9 | Messeranordnung | | |
| 10 | Untermesser | | |
| 11 | Obermesser | | |
| 12 | Schneide | | |
| 13 | Schneide | | |
| 14 | Drehachse | | |
| 15 | Drehachse | | |
| 16 | Achse | | |
| 17 | Antriebswelle | | |
| 18 | Lagerung | | |
| 19 | Lagerung | | |
| 20 | Flanke | | |
| 21 | Flanke | | |
| 25 | Motor | | |
| 26 | Abdeckung | | |
| 27 | Riemen | | |
| 28 | Träger | | |
| 29 | Folienstreifen | | |
| 30 | Arbeitspunkt | | |
| 31 | Ecken | | |
| 32 | Abschnitt | | |
| 34 | Führungsrolle | | |
| 35 | Führungsrolle | | |
| 36 | Führungsrolle | | |

## Patentansprüche

1. Messeranordnung (9) zum Abschneiden einer zwischen zwei Glastafeln (3) liegenden und über Außenkanten (5, 6) der Glastafeln (3) herausragenden thermoplastischen Kunststofffolie (4) in einer Vorrichtung (1) zur Herstellung von Verbundsicherheitsglasscheiben mit folgenden Merkmalen:
• einem scheibenförmigen Untermesser (10) und einem scheibenförmigen Obermesser (11);
• jedes der Messer (10; 11) hat eine entlang seines äußeren Umfangs umlaufende Schneide (12; 13), ist drehbar um eine Drehachse (14; 15) gelagert und hat eine Flanke (20; 21), die sich auf einer seiner Seiten von seiner Schneide (12; 13) in Richtung zu seiner Drehachse (14; 15) erstreckt;
• zumindest eines der Messer (11) ist drehfest mit einer Antriebswelle (17) verbunden, welche von einem Motor (25) antreibbar ist;
• die beiden Messer (10, 11) sind so zueinander angeordnet, dass die beiden Schneiden (12, 13) sich berühren und dass sich die Flanken (20, 21) der beiden Messer (10, 11) abschnittsweise überdecken, um ein scherenartiges aneinander Entlanggleiten der beiden Schneiden (12, 13) zum Durchtrennen der Folie (4) zu ermöglichen;
• zumindest die Schneide (13) eines der Messer (11) weist entlang seiner Drehachse (15) gesehen eine von der Kreisform abweichende Form auf;
• die von der Kreisform abweichende Schneide (13) weist an mehreren entlang des Umfangs des Messers (11) verteilten Stellen (31) den gleichen Abstand zur Drehachse (15) des Messers auf;
• zwischen jeweils zwei der Stellen (31), deren Abstand zur Drehachse (15) des Messers (11) gleich ist, verändert die Schneide (13) ihren Abstand zur Drehachse (15) des Messers (11) stetig.

2. Messeranordnung nach Anspruch 1, in welcher die von der Kreisform abweichende Schneide (13) zwischen jeweils zwei der Stellen (31), deren Abstand zur Drehachse (15) des Messers (11) gleich ist, zumindest einen gradlinig verlaufenden Abschnitt (32) aufweist.

3. Messeranordnung nach Anspruch 2, in welcher die von der Kreisform abweichende Schneide (13) die Form eines Polygons hat.

4. Messeranordnung nach einer der vorstehenden Ansprüche, in welcher die von der Kreisform abweichende Schneide (13) an mehr als 5 gleichmäßig am Umfang des Messers (11) verteilten Stellen (31) den gleichen Abstand zur Drehachse (15) des Messers (11) aufweist.

5. Messeranordnung nach einem der vorstehenden Ansprüche, in welcher eines der Messer (10) eine kreisförmige Schneide (12) aufweist.

6. Messeranordnung nach Anspruch 5, in welcher das Obermesser (11) von dem Motor (25) antreibbar ist und eine von der Kreisform abweichende Schneide (13) aufweist, und in welcher das Untermesser (10) frei drehbar gelagert ist und eine kreisförmige Schneide (12) aufweist.

7. Messeranordnung nach einem der vorstehenden Ansprüche, in welcher zumindest eines der Messer (10; 11) in einem Schnitt entlang seiner Drehachse (14; 15) gesehen an seiner dem anderen Messer (11; 10) zugewandten Flanke (20; 21) konkav gekrümmt ist.

8. Messeranordnung nach Anspruch 7, in welchem beide Messer (10, 11) jeweils an ihrer dem anderen Messer (11, 10) zugewandten Flanke (20; 21) konkav gekrümmt sind.

9. Messeranordnung nach einem der vorstehenden Ansprüche, in welcher die Drehachse (14) des Untermessers (10) parallel zur Drehachse (15) des Obermessers (11) ist.

10. Vorrichtung (1) zur Herstellung von Verbundsicherheitsglasscheiben mit folgenden Merkmalen:
• einer Auflage (2) für übereinanderliegende Glastafeln (3) mit dazwischenliegender thermoplastischer Kunststofffolie (4), die über Außenkanten (5, 6) der Glastafeln (3) herausragt;
• einem entlang einer Außenkante (5) der Glastafeln (3) relativ zu der Auflage (2) bewegbaren Träger (28), an welchem eine Schneidvorrichtung (8) mit einer Messeranordnung (9) gemäß einem der vorstehenden Ansprüche angeordnet ist;
• zumindest einer drehbar an dem Träger (28) gelagerten Führungsrolle (34; 35) zum Anlegen an eine Außenkante (5) einer der Glastafeln (3);
• die Führungsrolle (34; 35) hat eine vorbestimmte Position relativ zu den Schneiden (12, 13) der beiden Messer (10, 11), welche sich bei einer Verschiebung des Trägers (28) nicht ändert, sodass die Führungsrolle (34; 35) beim Verschieben des Trägers (28) an der Außenkante (5) der Glastafel (3) entlang gerollt werden kann und dabei die Folie (4) von den scherenartig aneinander entlanggleitenden Schneiden (12, 13) der beiden Messer (10, 11) in einem gleichbleibenden Abstand zu der Außenkante (5) der Glastafel (3) abgeschnitten wird.

11. Vorrichtung nach Anspruch 10, in welcher die Drehachse der Führungsrolle (34; 35) senkrecht zu der Ebene der Auflage (2) für die Glastafeln (3) angeordnet ist.

12. Vorrichtung nach Anspruch 10 oder 11, welche eine erste Führungsrolle (34) zum Anlegen an eine Außenkante (5) einer unterhalb der Folie (4) liegenden Glastafel (3) und eine zweite Führungsrolle (35) zum Anlegen an eine Außenkante (5) einer oberhalb der Folie (4) liegenden Glastafel (3) aufweist.

13. Vorrichtung nach einem der Ansprüche 10 bis 12, in welcher zumindest eine Führungsrolle (36; 37) zum Anlegen an eine Oberseite oder Unterseite einer der Glastafeln (3) drehbar an dem Träger (28) gelagert ist.

14. Vorrichtung nach einem der Ansprüche 10 bis 13, in welcher die Drehachsen (14, 15) der Messer (10, 11) parallel zu der Ebene der Auflage (2) für die Glastafeln (3) angeordnet sind.

15. Vorrichtung nach einem der Ansprüche 10 bis 14, in welcher das Obermesser (11) auf der der Lagerung (18) des Untermessers (10) zugewandten Seite des Untermessers (10) angeordnet ist.

16. Verfahren zum Abschneiden einer zwischen zwei Glastafeln (3) liegenden und über Außenkanten (5, 6) der Glastafeln (3) herausragenden thermoplastischen Kunststofffolie (4) bei der Herstellung von Verbundsicherheitsglasscheiben mit folgenden Schritten:
• Positionieren einer Messeranordnung (9) gemäß einem der Ansprüche 1 bis 9 nahe einer Außenkante (5) der Glastafeln (3), so dass das Obermesser (11) oberhalb der Folienebene und das Untermesser (10) unterhalb der Folienebene liegt und beide Messer (10, 11) die Folienebene schneiden;
• motorisches Rotieren eines der Messer (11), so dass dessen Schneide (13) scherenartig an der Schneide (12) des anderen Messers (10) entlanggleitet und die Folie (4) von den beiden Schneiden (12, 13) durchtrennt wird;
• gleichzeitiges Bewegen der beiden Messer parallel zu der Außenkante (5) der Glastafel (3), sodass die Folie (4) in einem gleichbleibenden Abstand zu der Außenkante (5) der Glastafel (3) abgeschnitten wird.

17. Verfahren nach Anspruch 16, in welchem die Umfangsgeschwindigkeit des angetriebenen Messer (11) größer, insbesondere um einen Faktor zwischen eins und zwei, als die Vorschubgeschwindigkeit (A) der Messeranordnung (9) entlang der Außenkante der Glastafel (3) ist.

18. Verfahren nach Anspruch 16 oder 17, bei welchem zumindest an einer der Außenkanten (5; 6) der Glastafeln (3) vor dem Ausführen der in Anspruch 16 genannten Verfahrensschritte ein Streifen der über diese Außenkante (5) herausragenden Folie (4) abgeschnitten wird und die Folie (4) anschließend gemäß Anspruch 16 in einem gleichbleibenden Abstand zu dieser Außenkante (5) abgeschnitten wird.

19. Verfahren der Ansprüche 17 bis 18, bei welchem das Untermesser (10) beim Schneiden einen geringeren Abstand zu der Außenkante (5) der Glastafeln (3) als das Obermesser (11) aufweist.
